# EUROPEAN PATENT SPECIFICATION

(11) **EP 4 310 252 B1**
(45) Date of publication and mention of the grant of the patent: **07.10.2026**
(21) Application number: 23214554.0
(22) Date of filing: 25.07.2017
(51) Int. Cl.: E01B 9/02, E01B 9/10, E01B 9/30, F16B 5/02, F16B 35/04

(54) **SCREWED FASTENING SYSTEM FOR RAILWAY RAILS**
VERBESSERTES SCHRAUBBEFESTIGUNGSSYSTEM FÜR EISENBAHNSCHIENEN
SYSTÈME DE FIXATION PAR VISSAGE AMÉLIORÉ POUR RAILS DE CHEMIN DE FER

(30) Priority: 11.08.2016 GB 201613802
(43) Date of publication of application: 24.01.2024
(62) Document number(s) of the earlier application(s) in accordance with Art. 76 EPC: 23174952.4 / 4 234 960; 17748865.7 / 3 497 284
(73) Proprietor: Pandrol Limited, Worksop, Nottinghamshire S81 7AX (GB)
(72) Inventor: COX, Stephen John, Worksop, Nottinghamshire S81 7AX (GB); SPENCER, John David, Worksop, Nottinghamshire S81 7AX (GB)
(74) Representative: Haseltine Lake Kempner LLP

(56) References cited:
- EP-A1- 0 794 289
- WO-A1-2011/131905

## Description

The present invention relates to an improved screwed fastening system for railway rails. More particularly, the present invention relates to a device configured for use with a railway rail fastening clip and screwbolt assembly, a railway rail fastening clip, a screwbolt and a screwbolt assembly component for use with the device, and rail fastening apparatus comprising a railway rail fastening clip and a screwbolt assembly.

It is possible to retain some types of railway rail fastening clip (hereafter sometimes referred to simply as a "clip") in a first position, sometimes known as a "pre-assembly" or "parked" position, where the rail bearing portion of the clip is held under a small load adjacent to but not overlying a foot of a railway rail during installation or maintenance of the rail or other parts, before the clip is subsequently moved into a second "operative" position where the rail bearing portion of the clip applies a load to the rail foot. Some of these types of clip are secured by an anchoring device or shoulder which allows the clip simply to be driven laterally onto or off the rail foot. Such laterally-drivable clips are disclosed, for example, in WO93/12294, WO93/12295, WO93/12296 and WO2007/096620.

However, some other kinds of clips are secured in both the pre-assembly position and the operative position by a screwbolt assembly, comprising a screwbolt which carries a washer which is brought to bear on one or more portions of the clip. In order to allow the clip to be moved from its pre-assembly position to its operative position, the screwbolt must first be loosened to some extent to reduce the load applied by the washer to the clip. Once the clip is moved so as to overlie the rail foot, the screwbolt is tightened again to cause the washer to deflect the clip and thereby apply load to the rail foot through the rail bearing portion of the clip. The procedure is repeated in reverse when the clip is withdrawn from the rail foot. Screwed fastening assemblies of this kind are known, for example, from US5096119A, which shows a curly clip, an angled guide plate for locating the clip, and a screwbolt for fastening the clip in position.

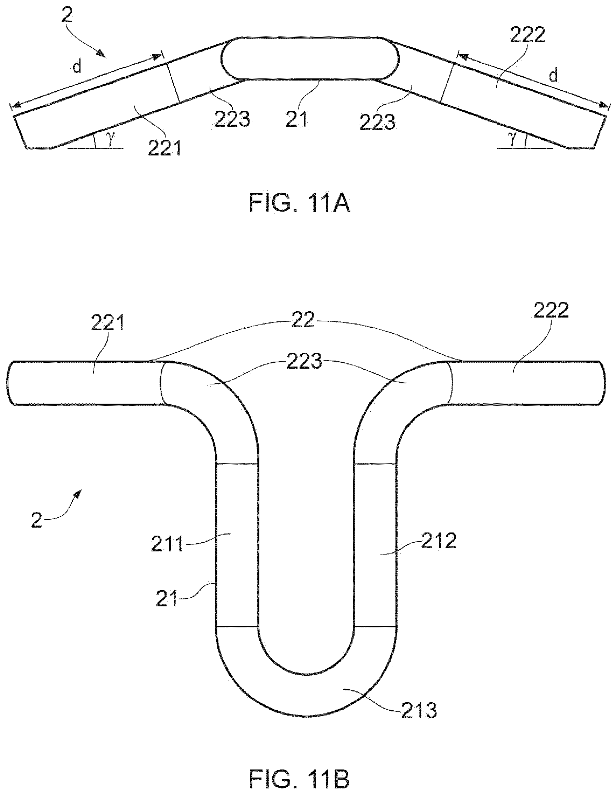

Another kind of screwed fastening system, published in WO2011/131905 and known as an SD assembly, is also used (see for example http://www.pandrol.com/product/pandrol-sd-for-ballasted/). The SD assembly comprises a resilient railway rail fastening clip (known as an "SD clip"), an example of which is shown in Figures 11A and 11B of the accompanying drawings. The SD clip 2 has a securing part 21, comprising two straight portions 211, 212 joined at one end by a curved portion 213 so that the securing part 21 is shaped like the letter U, and a rail bearing portion 22 comprising straight legs 221, 222 extending from each free end of the U via downwardly-extending bent portions 223. The SD clip is symmetrical about a line parallel to a driving direction of the clip. The SD assembly further comprises (not shown) a screwbolt assembly for securing the clip alongside a rail, and a guide device which prevents the clip from twisting as it is driven onto the rail foot. The guide device has two spaced-apart guide walls, having respective clip contact surfaces for guiding the clip as it is driven onto the rail in the driving direction, and a hole, which extends through the base of the device and is symmetrically located with respect to the clip contact surfaces, for receiving a portion of the screwbolt which is to screw into an underlying foundation. Again, in order to allow the clip to be moved from its pre-assembly position to its operative position, the screwbolt must first be loosened to some extent to reduce the load applied by the washer to the clip, and then re-tightened once the legs of the clip are in place on the rail to secure the clip and cause the clip legs to flatten towards the rail foot. A further example of a screwed fastening system is disclosed in EP0794289A1.

It is desirable to provide an improved type of screwed fastening system for railway rails which can facilitate movement of the clip onto and off the rail foot.

The present invention is defined by the independent claim, to which reference should now be made. Advantageous embodiments are set out in the dependent claims.

Thus, apparatus embodying this aspect of the invention can provide the advantage over the prior art in that, instead of having to loosen the screwbolt, push the clip forward into position over the rail foot, and then retighten the screwbolt, it is possible to translate the clip towards the rail simply by tightening the screwbolt. Furthermore, it is possible to translate the clip away from the rail by loosening the screwbolt. Accordingly, installation and maintenance of the rail track and the components associated therewith are facilitated.

The inter-engaging driving portions of the clip and screwbolt are desirably configured such that:
(i) an initial stage of rotation of the screwbolt in the first rotational direction is effective to translate the rail bearing portion of the clip from a first position, in which the rail bearing portion of the clip does not overlie the rail foot, into a second position, in which the clip overlies the rail foot, and a subsequent stage of rotation of the screwbolt in the first rotational direction does not translate the rail bearing portion of the clip but is effective to increase load on the rail bearing portion of the clip; whereas
(ii) an initial stage of rotation of the screwbolt in the second rotational direction, whilst the rail bearing portion of the clip is in the second position, is effective to decrease load on the rail bearing portion of the clip without translating the rail bearing portion of the clip, and a subsequent stage of rotation of the screwbolt in the second rotational direction is effective to translate the rail bearing portion of the clip from the second position to the first position.

In one embodiment of the rail fastening apparatus, the inter-engaging portions of the railway rail fastening clip and the screwbolt assembly comprise regions of the clip and screwbolt assembly where friction is high enough that rotation of the screwbolt whilst the inter-engaging portions of the clip and screwbolt assembly are in contact is sufficient to bring about the translational movement of the clip.

In another embodiment of the rail fastening apparatus the inter-engaging portions of the railway rail fastening clip and the screwbolt assembly comprise a gear mechanism, for example a rack and pinion drive where the rack is located on a portion of the clip and the pinion is located on the screwbolt assembly.

Reference will now be made, by way of example, to the accompanying drawings, in which:
Figures 1A and 1B are respective plan and cross-sectional views of a first device according to an embodiment of the present invention, shown adjacent to a railway rail;
Figure 2 is a simplified diagram for use in explaining the operation of a device according to an embodiment of the present invention;
Figures 3A and 3B are respective plan and cross-sectional views of a second device according to an embodiment of the present invention, shown adjacent to a railway rail;
Figures 4A and 4B are respective perspective and cross-sectional views of the device of Figures 3A and 3B together with a railway rail fastening clip and a screwbolt assembly;
Figure 5A is a screwbolt with an integral shaped flange;
Figure 5B is a shaped flange component for use with a flangeless screwbolt;
Figure 5C is a perspective view of rail fastening apparatus employing the screwbolt of Figure 5A;
Figures 6A, 6B and 6C show respective perspective, rear end and plan views of a first asymmetric railway rail fastening clip according to an embodiment of the present invention;
Figures 7A, 7B and 7C show respective perspective, rear end and plan views of a second asymmetric railway rail fastening clip according to an embodiment of the present invention;
Figures 8A and 8B are respective perspective and cross-sectional views of rail fastening apparatus which is not covered by the claims;
Figures 9A and 9B are respective cross-sectional and partial enlarged views of rail fastening apparatus which is not covered by the claims;
Figures 10A to 10D are simplified diagrams for use in explaining respective stages of use of rail fastening apparatus according to an embodiment of the present invention; and
Figures 11A and 11B (described above) show respective rear end and plan views of a prior art railway rail fastening clip.

A screwed rail fastening system embodying the present invention is configured such that rotation of the screwbolt in a first rotational direction brings about translational movement of a rail bearing portion of the railway rail fastening clip away from the screwbolt, and rotation of the screwbolt in a second rotational direction opposite to the first rotational direction brings about translational movement of the rail bearing portion of the railway rail fastening clip towards the screwbolt. That is, interaction between the screwbolt (or a component carried by the screwbolt) and the clip as the screwbolt is rotated directly causes lateral movement of the clip, towards or away from the rail depending on whether the screwbolt is tightened or loosened.

Various implementations of a screwed rail fastening system embodying the present invention will now be described. Such a screwed rail fastening system may comprise one or more of: a device according to embodiments of the present invention; a laterally-drivable railway rail fastening clip according to embodiments of the present invention; a screwbolt according to embodiments of the present invention; a component according to embodiments of the present invention; and a rail fastening apparatus according to embodiments of the present invention. In each case the system is configured such that rotation of the screwbolt in a first rotational direction brings about translational movement of a rail bearing portion of the railway rail fastening clip away from the screwbolt, and rotation of the screwbolt in a second rotational direction opposite to the first rotational direction brings about translational movement of the rail bearing portion of the railway rail fastening clip towards the screwbolt.

Devices embodying the present invention will now be described. It should be noted that the devices described below are designed for use with the afore-mentioned prior art SD clip or rail fastening clips similar in shape to the SD clip, but it is not essential that embodiments of the invention be used with an SD clip or a clip of shape similar to the SD clip, and the devices described may be modified if necessary to accommodate a range of alternative shapes of clip whilst retaining all the features necessary for the invention.

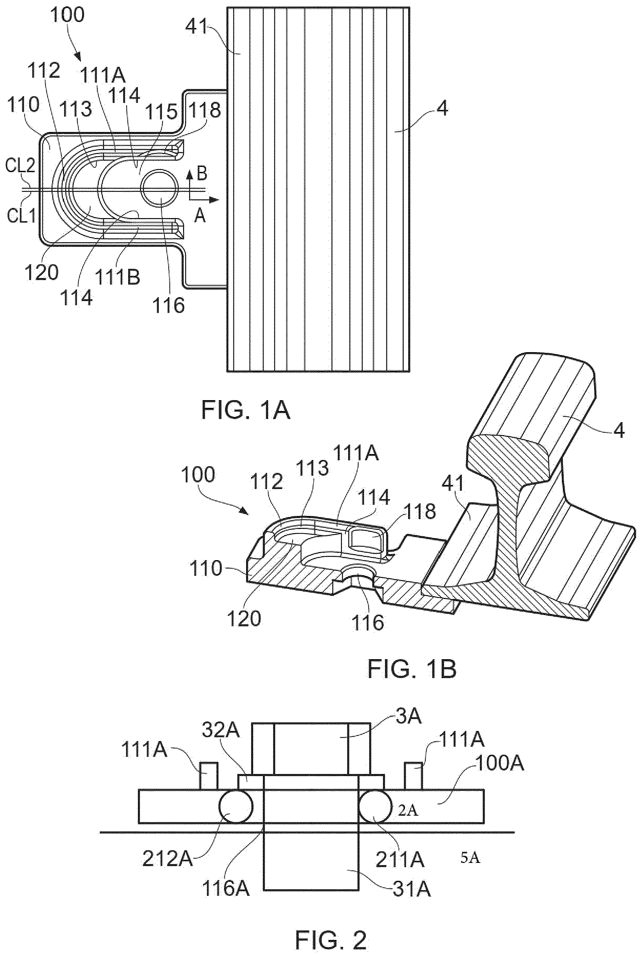

As shown in Figures 1A and 1B, a first device 100 according to embodiments of the present invention, which is preferably made of electrically-insulating material, comprises a base 110 from which two spaced-apart guide walls 111A, 111B project. The guide walls 111A, 111B are joined at the rear of the device 100 (i.e. the end of the device which is distal from the rail 4 when the device is in use) to a curved rear wall 112, upwardly-extending inner side faces 113 of the guide walls 111A, 111B and curved rear wall 112 together providing a substantially U-shaped clip abutment surface 113. Portions of the clip abutment surface on the guide walls 111A, 111B provide respective clip contact surfaces 114 between which a clip receiving region 115 for receiving a railway rail fastening clip 2 (not shown) is defined. A centre line CL1 of the clip receiving region 115 extends in a first direction A which is substantially perpendicular to the longitudinal axis of a railway rail 4 when the device 100 is located adjacent thereto. The clip contact surfaces 114 are configured to contact the railway rail fastening clip 2 so as to guide the railway rail fastening clip 2 whilst the railway rail fastening clip 2 is being driven towards (or away from) the rail foot 41 in (or opposite to) the first direction A. A hole 116 extends through the base 110 of the device 100 between the guide walls 111A, 111B for receiving a screw-threaded lower portion 31 of a screwbolt 3 (not shown). In the guide wall 111A, close to its free end, a recess 118 is provided to provide clearance for a washer 33 (as described later) carried by the screwbolt 3. A ledge 120 for supporting a rear portion of the clip 2 is provided between the hole 116 and the rear wall 112. The hole 116 has a centre line CL2 which is slightly offset with respect to the centre line CL1 of the clip receiving region 115 in a second direction B which is perpendicular to the first direction A such that the clip contact surfaces 114 are asymmetrically disposed relative to the hole 116. Typically the offset of the two lines CL1, CL2 is of the order of a few millimetres. In one example, the offset is 2mm, which equates to approximately 3.4% of the overall width of the clip receiving region 115. A simplified version of the device 100, denoted by reference numeral 100A, is shown in Figure 2. The device 100A has a hole 116A through which a lower portion 31A of a screwbolt 3A extends into an underlying foundation 5A. Guide walls 111A which position side portions 211A, 212A of a rail clip 2A are provided on either side of the hole 116A such that the guide walls 111A are asymmetrically disposed relative to the hole 116A. The frictional force applied to one side 211A of the clip 2A by a head 32A of the screwbolt 3A as the screwbolt 3A is rotated acts in the opposite direction to that applied by the head 32A to the other side 212A of the clip. In the prior art these opposed forces are equal in magnitude and therefore cancel each other out. However, because of the asymmetrically-arranged hole 116A in the device 100A, the head 32A of the screwbolt 3A has a larger contact area with one side portion 211A of the clip 2A than the other side portion 212A, and therefore the frictional force applied to the clip 2A by the head 32A of the screwbolt 3A as the screwbolt 3A is rotated is greater on the side portion 211A than on the other side portion 212A. Thus, the greater force on one side of the clip 2A, together with the difference in direction of the force, will cause the clip 2A to move towards or away from the foot of the rail, depending on the direction of rotation of the screwbolt 3A.

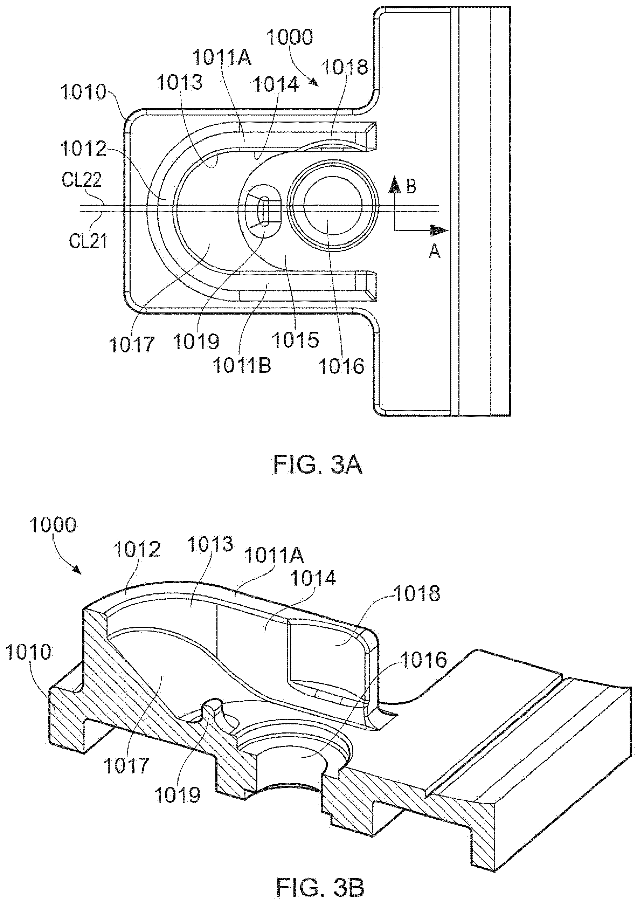

A second device 1000 according to an embodiment of the present invention will now be described with reference to Figures 3A and 3B. The device 1000, which is preferably made of electrically-insulating material, comprises a base 1010 from which two spaced-apart, substantially straight guide walls 1011A, 1011B project. The guide walls 1011A, 1011B are joined adjacent to the rear of the device 1000 (i.e. the end of the device which is to be distal from the rail when the device is in use) to a curved rear wall 1012, upwardly-extending inner side faces 1013 of the guide walls 1011A, 1011B and curved rear wall 1012 together providing a substantially U-shaped clip abutment surface. In the guide wall 1011A, close to its free end, a recess 1018 is provided. Portions of the clip abutment surface on the guide walls 1011A, 1011B provide respective clip contact surfaces 1014 between which a clip receiving region 1015 for receiving a railway rail fastening clip 2 (not shown) is defined. A centre line CL21 of the clip receiving region 1015 extends in a first direction A which is substantially perpendicular to the longitudinal axis of a railway rail 4 when the device 1000 is located adjacent thereto. The clip contact surfaces 1014 are configured to contact the railway rail fastening clip 2 so as to guide the railway rail fastening clip 2 whilst the railway rail fastening clip 2 is being driven towards (or away from) the rail foot in (or opposite to) the first direction A. A hole 1016 extends through the base 1010 of the device 1000 between the guide walls 1011 for receiving a screw-threaded lower portion 31 of a screwbolt 3 (not shown). A projection 1019 for inhibiting overdriving of the railway rail fastening clip 2 towards the rail 4 extends from the base 1010 adjacent to the hole 1016. The hole 1016 has a centre line CL22 which is slightly offset with respect to the centre line CL21 of the clip receiving region 1015 in a second direction B which is perpendicular to the first direction A such that the clip contact surfaces 1014 are asymmetrically disposed relative to the hole 1016. Typically the offset of the two lines CL21, CL22 is of the order of a few millimetres. In one example, the offset is 2mm, which equates to approximately 3.4% of the overall width of the clip receiving region 1015.

The main difference between the second device 1000 and the first device 100 is that, where the first device 100 had a ledge 120, the second device 1000 has a ramp 1017 adjoining the rear wall 1012 of the device 1000. The ramp 1017 has a ramp surface extending from a position below the top of the rear wall 1012 to the base 1010 of the device 1000, adjacent to the projection 1019, so as to face the end of the clip receiving region 1015 which is to be proximal to the rail 4 when the device 1000 is in use.

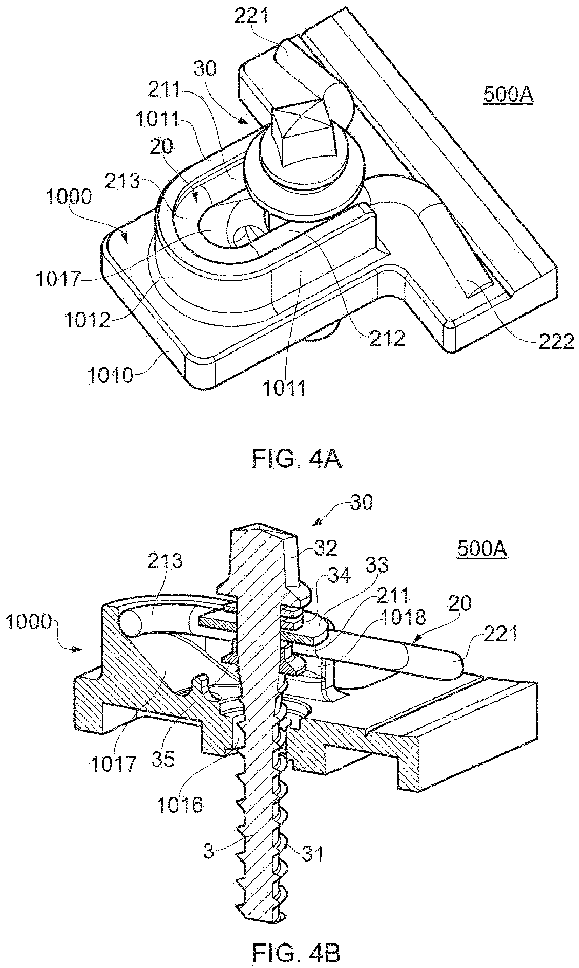

Figures 4A and 4B show the device 1000 in use in a screwed rail fastening system 500A with a rail clip 20 (similar in shape to the SD clip 2 of Figures 11A and 11B) and a screwbolt assembly 30. The screwbolt assembly 30 includes an elongate screwbolt 3 with a screw-threaded lower portion 31 and a head 32, a washer 33 (having a diameter larger than the outer diameter of the head 32 of the screwbolt 3 and approximately equal to the distance between the outer edges of a U-shaped part of the clip 20) which is carried by the screwbolt 3 beneath its head 32, a coil spring 34 carried by the screwbolt 3 between its head 32 and the washer 33, and a flange component 35 carried by the screwbolt 3 beneath the washer 33. The washer 33 is free to move up and down an unthreaded portion of the screwbolt 3 beneath its head 32, but is constrained to rotate with rotational movement of the screwbolt. The flange component 35 (which in some embodiments may not be required, as described later) is joined to the screwbolt 3 either by interference fit or another form of mechanical join. The device 1000 is configured such that, when the rail clip 20 is held by the screwbolt assembly 30 in its pre-assembly position in the clip receiving region 1015, a curved rear portion 213 of the rail clip 20 is located at the top of the ramp 1017 so as to abut the clip abutment surface along the rear wall 1012, and straight portions 211, 212 of the rail clip 20 which adjoin the ends of the curved rear portion 213 abut the clip abutment surface at the clip contact surfaces 1014 on the guide walls 1011. The ramp 1017 is arranged such that, as the screwbolt 3 is tightened and the washer 33 presses against the straight portions 211, 212 of the rail clip 20, the rail clip 20 is pushed downwards such that the rear portion 213 of the clip 20 moves down the ramp 1017 and legs 221, 222 at the front of the rail clip 20 move towards and onto the foot of the rail 4, assisted by the frictional force applied to the rail clip 20 by the asymmetrically-located washer 33. Once the coil spring 34 is fully compressed, the rail clip 20 no longer moves forward, but further tightening of the screwbolt 3 causes the clip legs 221, 222 to be pressed towards the rail foot.

Withdrawal of the rail clip 20 from the rail foot is achieved by loosening the screwbolt 3, firstly to release the compressive force applied to the clip legs 221, 222 and then to draw the clip off the rail foot using the frictional force between the asymmetrically-located washer 33 and the clip portions 211, 212. Flange component 35 provides additional contact with the clip to assist clip withdrawal and to lift the clip once the clip is released from its compressed state.

As mentioned above, a device, such as the first and second devices described above, can be used with a conventional screwbolt assembly and/or a conventional railway rail fastening clip, so it may be possible to use existing clips and screwbolt assemblies when retrofitting devices embodying the invention to rail track in place of a conventional guide device.

On the other hand, it may be desirable in some circumstances to use a modified screwbolt and/or modified rail clip with a device according to an embodiment of the present invention.

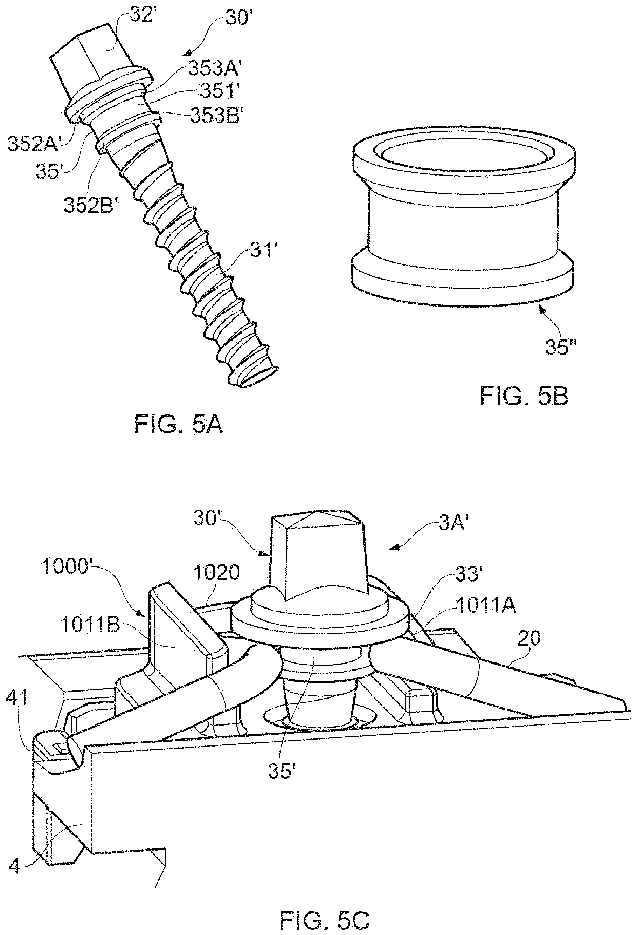

For example, Figure 5A shows a screwbolt 30'. The screwbolt 30' has an elongate shank with a screw-threaded lower portion 31', a head 32' on top of the shank, and an integrally-formed shaped flange portion 35' located on the shank between the head 32' and the screw-threaded lower portion 31'. The flange portion 35' comprises a central section 351' having a cylindrical outer surface, upper and lower end sections 352A', 352B' each having a cylindrical outer surface the diameter of which is greater than that of the central section 351' but less than the diameter of the outer diameter of the head 32', an upper intermediate section 353A' connecting the upper end section 352A' and the central section 351', and a lower intermediate section 353B' connecting the lower end section 352B' and the central section 351', the upper and lower intermediate sections 353A', 353B' having outer surfaces which are inclined such that they meet the outer surface of the central section 351' at an oblique angle. In one example, the outer surface of the lower intermediate section 353B' is angled at 130° with respect to the outer surface of the central section 351'. The angle of the outer surface of the upper intermediate section 353A' in this embodiment is also 130° but the choice of this angle is arbitrary, since this surface is masked by a washer (washer 33' described below) and indeed may not be oblique. The shaping and spacing of the upper and lower intermediate sections 353A' and 353B' is such that together with the central section 351' they define a recess for receiving the U-shaped portion of an SD clip 20 or the like, as shown in Figure 5C. The inclined surface of the lower intermediate section 353B' effectively forms a 'rotating ramp' that encourages the clip back off the rail, i.e. as the screwbolt 30' is loosened, frictional contact between one side of the clip 20' and the inclined surface of the lower intermediate section 353B', as it rotates together with the screwbolt 30', drags and lifts the clip 20' back off the rail.

As also shown in Figure 5C, a screwbolt assembly 3A' including the screwbolt 30' also includes a washer 33' (having a diameter larger than the outer diameter of the head 32' of the screwbolt 30' and approximately equal to the distance between the outer edges of the U-shaped part of the clip 20 which is carried by the screwbolt 30' beneath its head 32'). Washer 33' is fitted to the screwbolt 30' by passing it over the flange portion 35', so washer 33' requires a larger inside diameter than that of washer 33 in Figure 4A, and is a clearance fit with the upper end section 352A'. Provision of the flange portion 35' on the screwbolt 30' avoids the need to provide a coil spring 34 and a flange component 35 like those carried by the screwbolt 30 in Figures 4A and 4B, although in some circumstances it may be preferable to provide a separate collar 35" to be carried by a conventional screwbolt 3 instead of a modified screwbolt 30' with an integrally-formed flange portion 35'. Such a separate collar 35" is shown in Figure 5B, from which it can be seen that the outer shape of the collar 35" is the same as that of the integrally-formed flange portion 35'. The separate collar 35" is joined to a conventional screwbolt 3 (not shown) either by intereference fit or another form of mechanical joining such that it is constrained to turn with the screwbolt 3. In Fig. 5C device 1000' is a modification of the device 1000 of Figures 3A and 3B. The device 1000' differs from the device 1000 in that it does not have a rear wall 1012. Instead the top of the ramp 1017 (not shown in Figure 5C) ends in an open ledge 1020 that is provided to support the clip 20 when the clip is in its "parked" position. In the absence of the rear wall 1012, the clip 20 is prevented from moving too far rearwards by stops (not shown) and the guide walls 1011A, 1011B.

On existing sleepers (and probably also on new ones, where a centrally-located screwbolt hole position would most likely be retained for reasons of compatibility), slightly offsetting the clip position from the centre line of the sleeper will cause the loading of the clip on the rail to be disposed unequally relative to the sleeper centre line, although this in itself is unlikely to make any difference or cause any problem in practice. However the clip, when installed, will also be in a slightly asymmetric position relative to the bolt, so the loading on the screwbolt (and the reaction on the clip) will in turn be slightly asymmetric, which might in some circumstances be significant. In order to compensate for this asymmetric loading it may be desirable to provide an asymmetric rail fastening clip so that the loads on the screwbolt balance out.

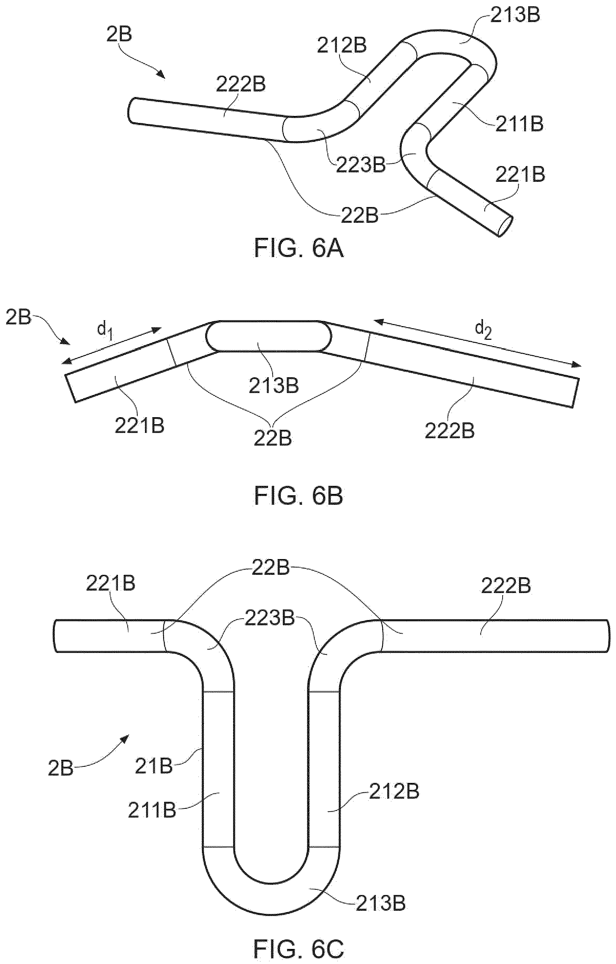

A first such asymmetric railway rail fastening clip 2B according to an embodiment of the present invention is shown in Figures 6A to 6C. In this embodiment clip 2B is similar in shape to that of the conventional SD clip 2 shown in Figures 11A and 11B, in that clip 2B has a securing part 21B, comprising two straight portions 211B, 212B joined at one end by a curved portion 213B so that the securing part 21B is shaped like the letter U, and a rail bearing portion 22B comprising straight legs 221B, 222B extending from each free end of the U via downwardly-extending bent portions 223B. Clip 2B differs from clip 2 in that, unlike clip 2 where the legs 221 and 222 are each of the same length d, one of the legs (in this example leg 222B), is of length d₂ which is longer than the length d₁ of the other leg (in this example leg 221B), by an amount designed to balance the loads on the screwbolt. For example, the difference in length between the legs may be around 10mm, but could be less than this or as much as around 20mm.

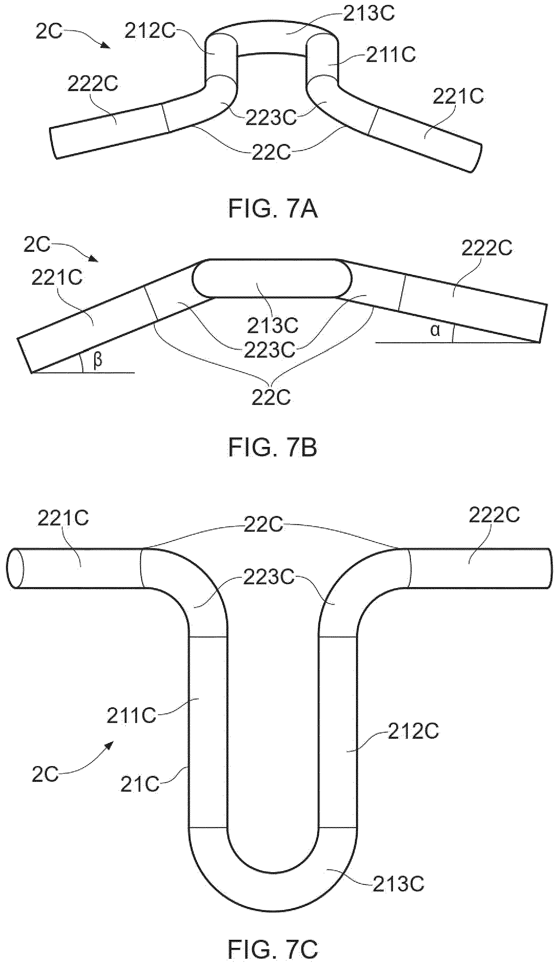

A second such asymmetric railway rail fastening clip 2C according to an embodiment of the present invention is shown in Figures 7A to 7C. In this embodiment clip 2C is also similar in shape to that of the conventional SD clip 2 shown in Figures 11A and 11B, in that clip 2C has a securing part 21C, comprising two straight portions 211C, 212C joined at one end by a curved portion 213C so that the securing part 21C is shaped like the letter U via downwardly-extending bent portions 223, and a rail bearing portion 22C comprising straight legs 221C, 222C extending from each free end of the U via downwardly-extending bent portions 223C. Clip 2C differs from clip 2 in that, unlike clip 2 where each of the legs 221 and 222 are inclined to the horizontal at the same angle magnitude γ, one of the legs (in this example leg 221C) is inclined to the horizontal at an angle β the magnitude of which is larger than that of an angle α at which the other leg (in this example leg 222C) is inclined to the horizontal, α being offset from β by an amount designed to balance the loads on the screwbolt. For example β:α may be around 2:1. Although not shown in Figures 11A and 7B, angle β may also be larger in magnitude than angle γ, such that one side of the clip 2C will be biased towards the screwbolt.

The clips 2B and 2C are examples of how the conventional SD clip 2 may be made asymmetric, but other modifications of the SD clip may be possible in order to achieve balancing of load on the screwbolt. For example, a clip (not shown) with legs of unequal length like those of clip 2B might also have legs with an angular offset like those of clip 2C. Alternatively, or in addition to one or more of the modifications mentioned above, the clip 2 may be modified such that the bend angles of bent portions 223 are unequal, so as to allow the arm 211 or 212 to be lengthened or shortened. It is also possible to imagine other forms of laterally-drivable rail fastening clip, suitable for a screwed fastening system with an asymmetrically-located screwbolt hole, which are asymmetric about a line parallel to a driving direction of the clip such that load on the screwbolt is balanced.

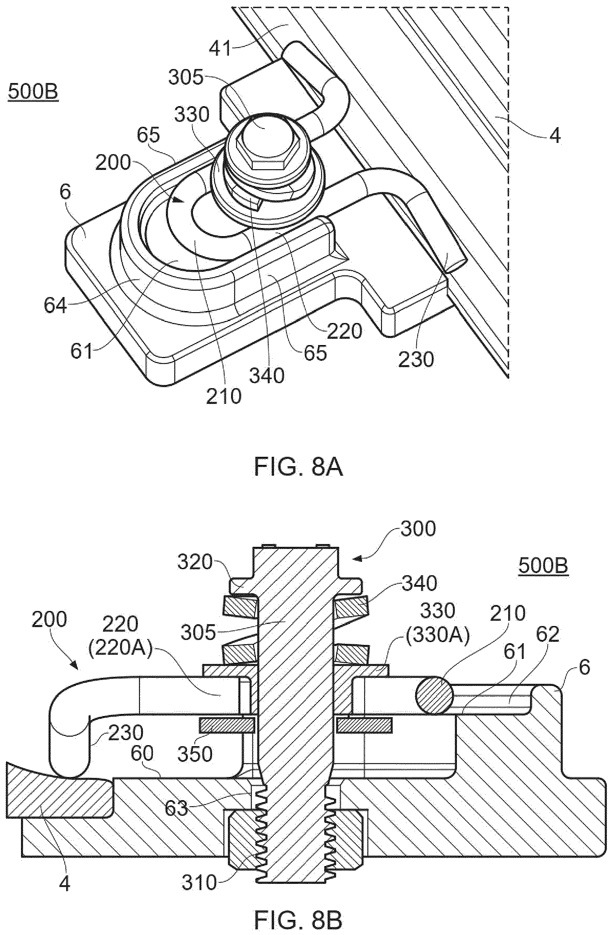

Figures 8A and 8B show an embodiment of rail fastening apparatus in a screwed fastening system 500B, which is not covered by the claims. In this embodiment the rail fastening apparatus comprises a railway rail fastening clip 200 and a screwbolt assembly 300 configured to bear on the clip 200 to secure the railway rail fastening clip 200 at a desired location adjacent to a railway rail 4. The rail clip 200 comprises a substantially U-shaped securing part, consisting of two substantially straight portions 220 joined at one end by a bent rear portion 210, and a rail bearing part, consisting of two, partially-bent legs 230 connected to respective free ends of the straight portions 220 so as to extend outwardly therefrom. The screwbolt assembly 300 comprises an elongate screwbolt 305 having a lower screw-threaded portion 310 and an upper unthreaded portion with a head 320, an upper washer portion 330 carried by the screwbolt 305 beneath its head 320 which is constrained to rotate with the screwbolt 305 but can move up and down its length, a coil spring 340 carried by the screwbolt 305 between its head 320 and the upper washer portion 330, and a lower washer portion 350 carried by the screwbolt 305 beneath the upper washer portion 330. The lower washer portion 350 can be held up by a coil spring (not shown) between the base of a clip guide device (described below) and the lower washer portion 350, or by other suitable means, for example a deformation in the screwbolt or a circlip.

The railway rail fastening clip 200 and the screwbolt assembly 300 have respective inter-engaging driving portions 220A, 330A at which the screwbolt assembly 300 engages the clip 200. The inter-engaging portions 220A, 330A are regions of high friction which are such that rotation of the screwbolt 305 about its longitudinal axis in a first rotational direction brings about translational movement of the rail bearing part of the clip 200 away from the longitudinal axis of the screwbolt 305, and rotation of the screwbolt 305 about its longitudinal axis in a second rotational direction opposite to the first rotational direction brings about translational movement of the rail bearing part of the clip 200 towards the longitudinal axis of the screwbolt 305.

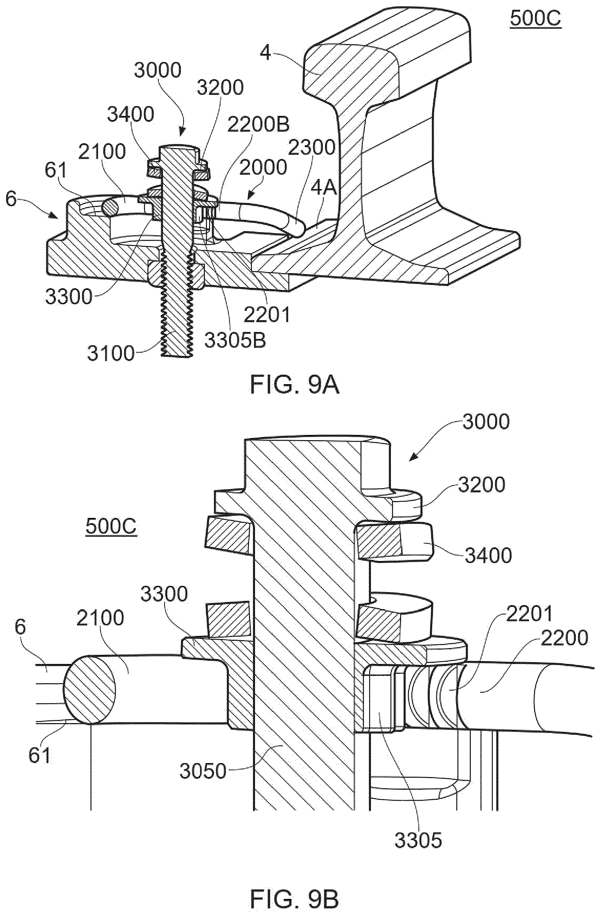

In an alternative embodiment of the rail fastening apparatus , the inter-engaging driving portions may comprise a gear mechanism. One example of a suitable gear mechanism may be a rack and pinion drive, and such a mechanism is shown in the screwed fastening system 500C illustrated in Figures 9A and 9B. In this embodiment the rail fastening apparatus comprises a railway rail fastening clip 2000 and a screwbolt assembly 3000 configured to bear on the clip 2000 to secure the railway rail fastening clip 2000 at a desired location adjacent to a railway rail 4. The rail clip 2000 comprises a substantially U-shaped securing part, consisting of two substantially straight portions 2200 joined at one end by a bent rear portion 2100, and a rail bearing part, consisting of two, partially-bent legs 2300 connected to respective free ends of the straight portions 2200 so as to extend outwardly therefrom. The screwbolt assembly 3000 comprises an elongate screwbolt 3050 having a lower screw-threaded portion 3100 and an upper unthreaded portion with a head 3200, an upper washer portion 3300 carried by the screwbolt 3050 beneath its head 3200 which is constrained to rotate with the screwbolt 3050 but can move up and down its length, and a coil spring 3400 carried by the screwbolt 3050 between its head 3200 and the upper washer portion 3300. The screwbolt assembly 3000 may also comprise a lower washer portion (not shown) carried by the screwbolt 3050 beneath the upper washer portion 3300. The lower washer portion could be held up by a coil spring (not shown) between the base of a clip guide device (described below) and the lower washer portion, or by other suitable means, for example a deformation in the screwbolt or a circlip.

The railway rail fastening clip 2000 and the screwbolt assembly 3000 have respective inter-engaging driving portions 2201, 3305 at which the screwbolt assembly 3000 engages the clip 2000. The inter-engaging portions 2201, 3305 consist of a rack and pinion drive arranged such that rotation of the screwbolt 3050 about its longitudinal axis in a first rotational direction brings about translational movement of the rail bearing part of the clip 2000 away from the longitudinal axis of the screwbolt 3050, and rotation of the screwbolt 3050 about its longitudinal axis in a second rotational direction opposite to the first rotational direction brings about translational movement of the rail bearing part of the clip 2000 towards the longitudinal axis of the screwbolt 3050.

In both embodiments the inter-engaging driving portions 220A, 330A, 2201, 3305 of the clip 200, 2000 and screwbolt assembly 300, 3000 are configured such that an initial stage of rotation of the screwbolt 305, 3050 in the first rotational direction is effective to translate the rail bearing part of the clip 200, 2000 from a first position, in which the rail bearing part of the clip 200, 2000 does not overlie the rail foot 4A, into a second position, in which the clip 200, 2000 overlies the rail foot 4A. However, a subsequent stage of rotation of the screwbolt 305, 3050 in the first rotational direction does not translate the rail bearing part of the clip 200, 2000 but is effective to increase load on the rail bearing part of the clip. On the other hand, an initial stage of rotation of the screwbolt 305, 3050 in the second rotational direction, whilst the rail bearing part of the clip 200, 2000 is in the second position, is effective to decrease load on the rail bearing part of the clip 200, 2000 without translating the rail bearing part of the clip 200, 2000, and a subsequent stage of rotation of the screwbolt 305, 3050 in the second rotational direction is effective to translate the rail bearing part of the clip 200, 2000 from the second position to the first position.

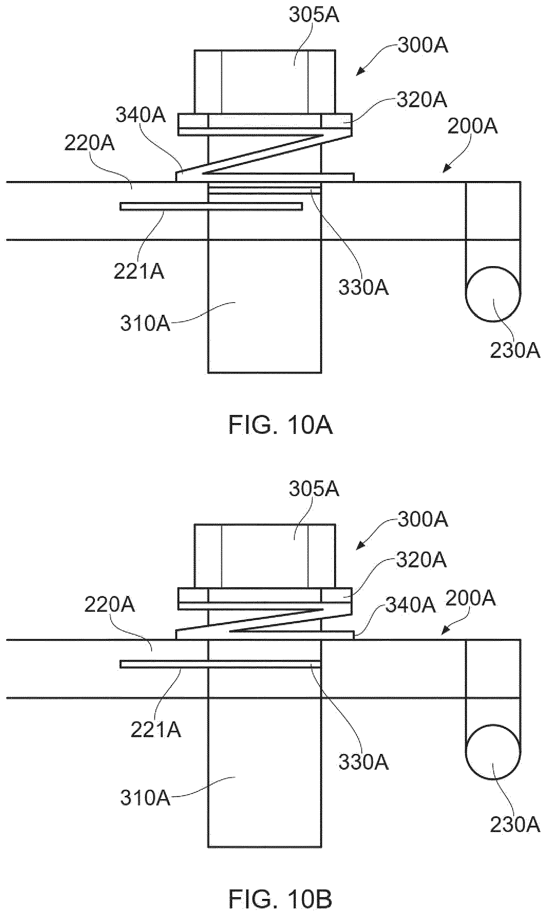

An explanation of these processes will now be made with reference to Figures 10A to 10D, using as an example inter-engaging driving portions comprising a rack and pinion drive, where teeth 221A are provided on the inner surface of an arm 220A of a clip 200A and teeth 330A are provided around the periphery of a screwbolt 305A above its screw-threaded portion 310A (screw thread not shown). Screwbolt assembly 300A also comprises a weak coil spring 340A beneath head 320A of the screwbolt 305A. Only part of the clip 200A is shown in the Figures, and a clip guide device, rail and rail foundation are not shown.

In the initial configuration shown in Figure 10A, which represents the clip 200A in its pre-assembly position, the coil spring 340A is uncompressed, and the teeth 221A and 330A are not engaged.

As the screwbolt 305A is rotated in a first rotational direction (i.e. so as to tighten the screw-threaded portion 310A in the rail foundation), as shown in Figure 10B, the teeth 221A and 330A come into engagement, and the coil spring 340A begins to compress.

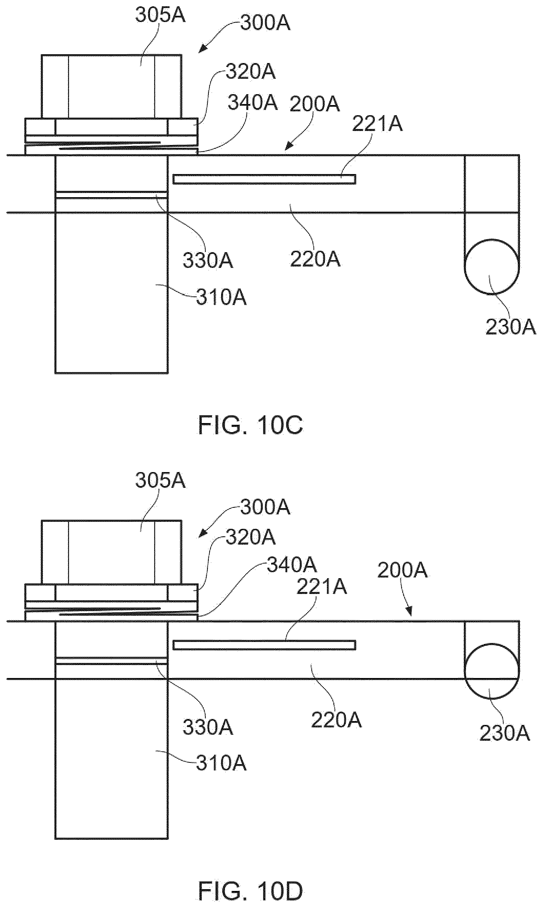

As the screwbolt is further rotated (not shown in Figure 10B) in the first rotational direction the inter-engaged teeth 221A, 330A cause the rail bearing part 230A of the clip 200A to move towards the rail (to the right in the Figure). However, as shown in Figure 10C, a preset amount of rotation of the screwbolt 305A in the first rotational direction causes the clip 200A to move forward such a distance that the teeth 221A move past and no longer engage the teeth 330A, after which further rotation of the screwbolt 305A in the first rotational direction does not move the rail bearing part 230A of the clip 200A towards the rail. At this time the rail bearing part 230A of the clip 200A overlies the rail foot and the coil spring 340A is coil bound.

As the coil spring 340A is now coil bound, as shown in Figure 10D further rotation of the screwbolt 305A in the first rotational direction causes the head 320A of the screwbolt 305A to apply a compressive force to the clip 200A, which causes the clip 200A to deflect such that the rail bearing part 230A of the clip 200A is pressed against the rail foot generating clamping force.

Although in the example discussed with reference to Figures 10A to 10D the teeth 220A on the clip 200A disengage completely from the teeth on the screwbolt 305A, in practice it is desirable, in order to ensure that the clip 200, 2000 can be withdrawn from the rail foot simply by rotating the screwbolt 305A in the second rotational direction (i.e. so as to loosen the screw-threaded portion 310A), the inter-engaging driving portions are arranged such that, at the end of the initial stage of rotation in the first rotational dierction, there is still some small amount of overlap between them such that, as soon as the screwbolt 305A has been loosened enough to decompress the clip 200A, further rotation of the screwbolt 305A in the second rotational direction will cause the inter-engaging driving portions to pull the clip back into the pre-assembly position.

For example, in the case of the rail fastening apparatus of Figures 9A and 9B, at the end of the initial stage of rotation in the first rotational direction the pinion 3305 runs out of rack teeth 2201 to engage with and contacts the portion of the clip adjacent to the rack. Further tightening of the screwbolt 305 then tightens through the gear. Thus, when the screwbolt is later loosened, the teeth of the rack and pinion are still engaged and able to pull the clip back.

The rail fastening apparatuses of Figures 8A and 8B and Figures 9A and 9B are both used with a clip guide device 6. The clip guide device 6 is shaped to accommodate the rail clips 200, 2000, and a clip guide device intended for use with a different shape of clip to that of clips 200, 2000 may therefore have a different configuration. The clip guide device 6, which is preferably made of electrically-insulating material, comprises a base 60 from which two spaced-apart, substantially straight guide walls 65 project. The guide walls 65 are joined adjacent to the rear of the device 6 (i.e. the end of the device 6 which is distal from the rail when the device is in use) to a curved rear wall 64, upwardly-extending inner side faces 62 of the guide walls 65 and curved rear wall 64 together providing a substantially U-shaped clip abutment surface. Portions of the clip abutment surface on the guide walls 65 provide respective clip contact surfaces between which a clip receiving region for receiving the railway rail fastening clip 200, 2000 is defined. The clip contact surfaces are configured to contact the railway rail fastening clip 200, 2000 so as to guide the railway rail fastening clip 200, 2000 whilst the railway rail fastening clip 200, 2000 is being driven towards or away from the rail foot. A hole 63 extends through the base 60 of the device 6 between the guide walls 65 for receiving the screw-threaded lower portion 310 of the screwbolt 305, 3050 such that the clip contact surfaces are symmetrically disposed relative to the hole 63. Because the clip contact surfaces are symmetrically disposed relative to the hole 63, the arrangements employing the device 6 (systems 500B and 500C) are not covered by the claims. These arrangements are retained for understanding the invention.

A ledge 61 projects inwardly from the rear wall 64, and the rear portion 210, 2100 of the rail clip 200, 2000 lies over the ledge 61 when the clip is in its pre-assembly position. As the screwbolt 305, 3050 is rotated in the first rotational direction, the action of the inter-engaging driving portions 220A, 330A, 2201, 3305 moves the rail clip 200, 2000 from its pre-assembly position over the ledge 61 until the clip 200, 2000 reaches its operative position with the rail bearing part of the clip 200, 2000 overlying the rail foot. The clip 200, 2000 is then compressed by further tightening of the screwbolt 305, 3050 to apply clamping load to the rail, pushing the rear portion 210, 2100 of the clip 200, 2000 below the level of the ledge 61.

Rotation of the screwbolt 305, 3050 in the second rotational direction firstly decompresses the clip and then brings the rear portion 210, 2100 of the clip 200, 2000 into abutment with the edge of the ledge 61. Subsequent loosening of the screwbolt 305, 3050 allows the clip 200, 2000 to be lifted (for example by means of lower washer portion 350 and an underlying coil spring attached to the screwbolt 305, 3050) until the bottom of the rear portion 210, 2100 of the clip 200, 2000 is above the edge of the ledge 61, allowing further retraction of the clip 200, 2000 back into its pre-assembly position.

## Claims

1. A screwed rail fastening system (500A; 500B; 500C) for fastening a railway rail (4) to an underlying foundation, the system comprising:
a clip guide device (100; 100A; 1000; 1000');
a screwbolt assembly (30; 30') comprising a screwbolt (3; 3A', 305; 305A; 3000) having an elongate shank with a lower portion and a head (32A); and
a laterally-drivable railway rail fastening clip (2, 2B; 2C, 20, 200, 2000), configured for use with the device (100; 100A; 1000; 1000') and the screwbolt (3; 3A', 305; 305A; 3000) to secure the railway rail fastening clip at a desired location adjacent to the railway rail (4), the railway rail fastening clip (2, 2B; 2C, 20, 200, 2000) being secured by the screwbolt (3; 30'; 305; 305A; 3000), the railway rail fastening clip having a rail bearing portion for bearing on a foot of the railway rail,
the device (100; 100A; 1000; 1000') having:
a base (110; 1010);
clip contact surfaces (114; 1014) provided on upwardly-extending side faces of spaced-apart guide walls (111A, 111B; 1011A, 1011B) projecting from the base, the clip contact surfaces defining therebetween a clip receiving region (115; 1015) for receiving the railway rail fastening clip, the clip receiving region having a centre line (CL1; CL21) which extends in a first direction, and the clip contact surfaces being configured to contact the railway rail fastening clip so as to guide the railway rail fastening clip whilst the railway rail fastening clip is being driven in the first direction; and
a hole (116; 1016) which extends through the base of the device between the guide walls for receiving the lower portion of the screwbolt;
wherein the hole has a centre line (CL2; CL22) which is offset with respect to the centre line of the clip receiving region in a second direction which is transverse to the first direction such that the clip contact surfaces are asymmetrically disposed relative to the hole and that rotation of the screwbolt in a first rotational direction brings about translational movement of the rail bearing portion of the railway rail fastening clip away from the screwbolt, and rotation of the screwbolt in a second rotational direction opposite to the first rotational direction brings about translational movement of the rail bearing portion of the railway rail fastening clip towards the screwbolt, and
wherein the railway rail fastening clip and the screwbolt assembly have respective inter-engaging driving portions at which the screwbolt assembly engages the clip, the inter-engaging portions (220A, 330A; 2201, 3305) being configured and arranged such that rotation of the screwbolt about the longitudinal axis of the screwbolt in a first rotational direction brings about translational movement of the rail bearing portion of the clip away from the longitudinal axis of the screwbolt, and rotation of the screwbolt about the longitudinal axis of the screwbolt in a second rotational direction opposite to the first rotational direction brings about translational movement of the rail bearing portion of the clip towards the longitudinal axis of the screwbolt.

2. The system as claimed in claim 1, wherein the device further comprises an upwardly-inclined ramp (1017) configured to support a rear portion of the railway rail fastening clip, the ramp being provided at one end of the clip receiving region (1015) and having a ramp surface facing the opposite end of the clip receiving region.

3. The system as claimed in claim 1 or 2, wherein the inter-engaging driving portions (220A, 330A; 2201, 3305) are configured such that:
(i) an initial stage of rotation of the screwbolt (305; 3050) in the first rotational direction is effective to translate the rail bearing portion (230; 2300) of the clip (200; 2000) from a first position, in which the rail bearing portion of the clip does not overlie the rail foot, into a second position, in which the clip overlies the rail foot, and a subsequent stage of rotation of the screwbolt in the first rotational direction does not translate the rail bearing portion of the clip but is effective to increase load on the rail bearing portion of the clip; whereas
(ii) an initial stage of rotation of the screwbolt (305; 3050) in the second rotational direction, whilst the rail bearing portion (230; 2300) of the clip (200; 2000) is in the second position, is effective to decrease load on the rail bearing portion of the clip without translating the rail bearing portion of the clip, and a subsequent stage of rotation of the screwbolt in the second rotational direction is effective to translate the rail bearing portion of the clip from the second position to the first position.

4. The system as claimed in any of the preceding claims, wherein the inter-engaging portions (220A, 330A) of the railway rail fastening clip (200) and the screwbolt assembly (300) comprise regions of the clip and screwbolt assembly where friction is high enough that rotation of the screwbolt whilst the inter-engaging portions of the clip and screwbolt assembly are in contact is sufficient to bring about the translational movement of the clip.

5. The system as claimed in any of claims 1 to 3, wherein the inter-engaging portions (2201, 3305) of the railway rail fastening clip (2000) and the screwbolt assembly (3000) comprise a gear mechanism.

6. The system as claimed in any of the preceding claims, wherein the railway rail fastening clip is asymmetric about a line parallel to a driving direction of the clip such that, when the railway rail fastening clip is in position on the railway rail, load on the screwbolt is balanced.

7. The system as claimed in claim 6, wherein two portions (221B, 222B) of the clip (2B) which are adapted to bear on the railway rail, and are on opposite sides of the line respectively, are of unequal length.

8. The system as claimed in claim 6 or 7, wherein two portions (221C; 222C) of the clip (2C) which are adapted to bear on a railway rail, and are on opposite sides of the line respectively, extend at respective angles which are different in magnitude to one another.

9. The system as claimed in any of the preceding claims, wherein the railway rail fastening clip (2, 2B; 2C, 20, 200, 2000) is made of a rod of resilient material bent so as to have: a securing part (21B; 21C), comprising two straight arms (211B, 212B; 211C, 212C) joined at one end by a curved portion (213B; 213C) so that the securing part is shaped like the letter U; the rail bearing portion (22B; 22C) comprising two straight legs (221B, 222B; 221C, 222C); and two downwardly-extending bent portions (223B; 223C) connected respectively between free ends of the U and the straight legs.

10. The system as claimed in any of the preceding claims, wherein the screwbolt comprises a shank having a screw-threaded lower portion (31') and the head (32') on top of the shank, wherein an integrally-formed shaped flange portion (35') is located on the shank between the head and the screw-threaded lower portion, the flange portion comprising:
a central section (351') having a cylindrical outer surface,
an upper end section (352A') adjacent to the head of the screwbolt and a lower end section (352B') adjacent to the screw-threaded lower portion of the screwbolt, each of the upper and lower end sections having a cylindrical outer surface, the diameter of which is greater than that of the central section but less than the diameter of the outer diameter of the head,
an upper intermediate section (353A') connecting the upper end section and the central section, and a lower intermediate section (353B') connecting the lower end section and the central section, at least the lower intermediate section having an outer surface which is inclined such that it meets the outer surface of the central section at an oblique angle,
wherein the upper and lower intermediate sections together with the central section define a recess for receiving a portion of a railway rail fastening clip.

11. The system as claimed in any of claims 1 to 9, wherein the system further comprises a component (35") configured for location on the screwbolt between the head of the screwbolt and a screw-threaded lower portion on a shank of the screwbolt, the component comprising a body having a passageway therethrough for receiving the shank of the screwbolt, wherein the body comprises:
a central section (351') having a cylindrical outer surface,
an upper end section (352A') for location adjacent to the head of the screwbolt and a lower end section (352B') for location adjacent to the screw-threaded lower portion of the screwbolt, each of the upper and lower end sections having a cylindrical outer surface,
an upper intermediate section (353A') connecting the upper end section and the central section, and a lower intermediate section (353B') connecting the lower end section and the central section, at least the lower intermediate section having an outer surface which is inclined such that it meets the outer surface of the central section at an oblique angle,
wherein the upper and lower intermediate sections together with the central section define a recess for receiving a portion of a railway rail fastening clip.

12. The system as claimed in claim 10 or 11, wherein the upper intermediate section (353A') also has an outer surface which is inclined such that it meets the outer surface of the central section at an oblique angle.

## Patentansprüche

1. Verschraubtes Schienenbefestigungssystem (500A; 500B; 500C) zum Befestigen einer Eisenbahnschiene (4) an einem darunterliegenden Unterbau, wobei das System umfasst:
eine Klemmenführungsvorrichtung (100; 100A; 1000; 1000');
eine Schraubbolzenbaugruppe (30; 30'), umfassend einen Schraubbolzen (3; 3A', 305; 305A; 3000), der einen länglichen Schaft mit einem unteren Abschnitt und einem Kopf (32A) aufweist; und
eine seitlich antreibbare Eisenbahnschienenbefestigungsklemme (2, 2B; 2C, 20, 200, 2000), die zur Verwendung mit der Vorrichtung (100; 100A; 1000; 1000') und dem Schraubbolzen (3; 3A', 305; 305A; 3000) ausgelegt ist, um die Eisenbahnschienenbefestigungsklemme an einer gewünschten Stelle benachbart zu der Eisenbahnschiene (4) zu sichern, wobei die Eisenbahnschienenbefestigungsklemme (2, 2B; 2C, 20, 200, 2000) durch den Schraubbolzen (3; 30'; 305; 305A; 3000) gesichert ist, wobei die Eisenbahnschienenbefestigungsklemme einen Schienenauflageabschnitt zum Aufliegen auf einem Fuß der Eisenbahnschiene aufweist,
wobei die Vorrichtung (100; 100A; 1000; 1000') aufweist:
eine Basis (110; 1010);
Klemmenkontaktflächen (114; 1014), die an nach oben verlaufenden Seitenflächen von beabstandeten Führungswänden (111A, 111B; 1011A, 1011B) bereitgestellt sind, die von der Basis vorspringen, wobei die Klemmenkontaktflächen dazwischen einen Klemmenaufnahmebereich (115; 1015) zum Aufnehmen der Eisenbahnschienenbefestigungsklemme definieren, wobei der Klemmenaufnahmebereich eine Mittellinie (CL1; CL21) aufweist, die sich in einer ersten Richtung erstreckt, und wobei die Klemmenkontaktflächen ausgelegt sind, die Eisenbahnschienenbefestigungsklemme zu kontaktieren, um die Eisenbahnschienenbefestigungsklemme zu führen, während die Eisenbahnschienenbefestigungsklemme in der ersten Richtung angetrieben wird; und
ein Loch (116; 1016), das sich durch die Basis der Vorrichtung zwischen den Führungswänden zum Aufnehmen des unteren Abschnitts des Schraubbolzens erstreckt;
wobei das Loch eine Mittellinie (CL2; CL22) aufweist, die in Bezug auf die Mittellinie des Klemmenaufnahmebereichs in einer zweiten Richtung versetzt ist, die quer zu der ersten Richtung ist, so dass die Klemmenkontaktflächen asymmetrisch relativ zu dem Loch angeordnet sind und dass Drehung des Schraubbolzens in einer ersten Drehrichtung Translationsbewegung des Schienenauflageabschnitts der Eisenbahnschienenbefestigungsklemme weg von dem Schraubbolzen bewirkt, und Drehung des Schraubbolzens in einer zweiten Drehrichtung entgegengesetzt zu der ersten Drehrichtung Translationsbewegung des Schienenauflageabschnitts der Eisenbahnschienenbefestigungsklemme zu dem Schraubbolzen hin bewirkt, und
wobei die Eisenbahnschienenbefestigungsklemme und die Schraubbolzenbaugruppe jeweilige ineinandergreifende Antriebsabschnitte aufweisen, an denen die Schraubbolzenbaugruppe die Klemme in Eingriff nimmt, wobei die ineinandergreifenden Abschnitte (220A, 330A; 2201, 3305) so ausgelegt und angeordnet sind, dass Drehung des Schraubbolzens um die Längsachse des Schraubbolzens in einer ersten Drehrichtung Translationsbewegung des Schienenauflageabschnitts der Klemme weg von der Längsachse des Schraubbolzens bewirkt, und Drehung des Schraubbolzens um die Längsachse des Schraubbolzens in einer zweiten Drehrichtung entgegengesetzt zu der ersten Drehrichtung Translationsbewegung des Schienenauflageabschnitts der Klemme zu der Längsachse des Schraubbolzens hin bewirkt.

2. System nach Anspruch 1, wobei die Vorrichtung ferner eine nach oben geneigte Rampe (1017) umfasst, die ausgelegt ist, einen hinteren Abschnitt der Eisenbahnschienenbefestigungsklemme zu stützen, wobei die Rampe an einem Ende des Klemmenaufnahmebereichs (1015) bereitgestellt ist und eine Rampenfläche aufweist, die dem gegenüberliegenden Ende des Klemmenaufnahmebereichs zugewandt ist.

3. System nach Anspruch 1 oder 2, wobei die ineinandergreifenden Antriebsabschnitte (220A, 330A; 2201, 3305) so ausgelegt sind, dass:
(i) eine anfängliche Drehphase des Schraubbolzens (305; 3050) in der ersten Drehrichtung wirksam ist, den Schienenauflageabschnitt (230; 2300) der Klemme (200; 2000) von einer ersten Position, in der der Schienenauflageabschnitt der Klemme den Schienenfuß nicht überdeckt, in eine zweite Position zu verschieben, in der die Klemme den Schienenfuß überdeckt, und eine nachfolgende Drehphase des Schraubbolzens in der ersten Drehrichtung den Schienenauflageabschnitt der Klemme nicht verschiebt, aber wirksam ist, die Last auf den Schienenauflageabschnitt der Klemme zu erhöhen; wohingegen
(ii) eine anfängliche Drehphase des Schraubbolzens (305; 3050) in der zweiten Drehrichtung, während sich der Schienenauflageabschnitt (230; 2300) der Klemme (200; 2000) in der zweiten Position befindet, wirksam ist, die Last auf den Schienenauflageabschnitt der Klemme zu verringern, ohne den Schienenauflageabschnitt der Klemme zu verschieben, und eine nachfolgende Drehphase des Schraubbolzens in der zweiten Drehrichtung wirksam ist, den Schienenauflageabschnitt der Klemme von der zweiten Position in die erste Position zu verschieben.

4. System nach einem der vorhergehenden Ansprüche, wobei die ineinandergreifenden Abschnitte (220A, 330A) der Eisenbahnschienenbefestigungsklemme (200) und der Schraubbolzenbaugruppe (300) Bereiche der Klemme und der Schraubbolzenbaugruppe umfassen, an denen die Reibung hoch genug ist, dass Drehung des Schraubbolzens, während die ineinandergreifenden Abschnitte der Klemme und der Schraubbolzenbaugruppe in Kontakt sind, ausreicht, die Translationsbewegung der Klemme zu bewirken.

5. System nach einem der Ansprüche 1 bis 3, wobei die ineinandergreifenden Abschnitte (2201, 3305) der Eisenbahnschienenbefestigungsklemme (2000) und der Schraubbolzenbaugruppe (3000) einen Zahnradmechanismus umfassen.

6. System nach einem der vorhergehenden Ansprüche, wobei die Eisenbahnschienenbefestigungsklemme asymmetrisch um eine Linie parallel zu einer Antriebsrichtung der Klemme ist, so dass, wenn die Eisenbahnschienenbefestigungsklemme in Position auf der Eisenbahnschiene ist, die Last auf den Schraubbolzen ausgeglichen ist.

7. System nach Anspruch 6, wobei zwei Abschnitte (221B, 222B) der Klemme (2B), die dazu ausgelegt sind, auf der Eisenbahnschiene aufzuliegen, und die sich jeweils auf gegenüberliegenden Seiten der Linie befinden, ungleiche Länge aufweisen.

8. System nach Anspruch 6 oder 7, wobei zwei Abschnitte (221C; 222C) der Klemme (2C), die dazu ausgelegt sind, auf einer Eisenbahnschiene aufzuliegen, und die sich jeweils auf gegenüberliegenden Seiten der Linie befinden, sich unter jeweiligen Winkeln erstrecken, die in ihrem Betrag voneinander verschieden sind.

9. System nach einem der vorhergehenden Ansprüche, wobei die Eisenbahnschienenbefestigungsklemme (2, 2B; 2C, 20, 200, 2000) aus einem Stab aus elastischem Material hergestellt ist, der so gebogen ist, dass er aufweist: ein Befestigungsteil (21B; 21C), umfassend zwei gerade Arme (211B, 212B; 211C, 212C), die an einem Ende durch einen gekrümmten Abschnitt (213B; 213C) verbunden sind, so dass das Befestigungsteil wie der Buchstabe U geformt ist; den Schienenauflageabschnitt (22B; 22C), umfassend zwei gerade Beine (221B, 222B; 221C, 222C); und zwei nach unten verlaufende gebogene Abschnitte (223B; 223C), die beziehungsweise zwischen freien Enden des U und den geraden Beinen verbunden sind.

10. System nach einem der vorhergehenden Ansprüche, wobei der Schraubbolzen einen Schaft umfasst, der einen mit Gewinde versehenen unteren Abschnitt (31') und den Kopf (32') oben auf dem Schaft aufweist, wobei ein einstückig ausgebildeter geformter Flanschabschnitt (35') sich an dem Schaft zwischen dem Kopf und dem mit Gewinde versehenen unteren Abschnitt befindet, wobei der Flanschabschnitt umfasst:
einen mittleren Abschnitt (351') mit einer zylindrischen Außenfläche,
einen oberen Endabschnitt (352A') benachbart zu dem Kopf des Schraubbolzens und einen unteren Endabschnitt (352B') benachbart zu dem mit Gewinde versehenen unteren Abschnitt des Schraubbolzens, wobei der obere und der untere Endabschnitt jeweils eine zylindrische Außenfläche aufweisen, deren Durchmesser größer als derjenige des mittleren Abschnitts, aber kleiner als der Durchmesser des Außendurchmessers des Kopfes ist,
einen oberen Zwischenabschnitt (353A'), der den oberen Endabschnitt und den mittleren Abschnitt verbindet, und einen unteren Zwischenabschnitt (353B'), der den unteren Endabschnitt und den mittleren Abschnitt verbindet, wobei zumindest der untere Zwischenabschnitt eine Außenfläche aufweist, die so geneigt ist, dass sie die Außenfläche des mittleren Abschnitts unter einem schrägen Winkel trifft,
wobei der obere und der untere Zwischenabschnitt zusammen mit dem mittleren Abschnitt eine Aussparung zum Aufnehmen eines Abschnitts einer Eisenbahnschienenbefestigungsklemme definieren.

11. System nach einem der Ansprüche 1 bis 9, wobei das System ferner ein Bauteil (35") umfasst, das zur Anordnung auf dem Schraubbolzen zwischen dem Kopf des Schraubbolzens und einem mit Gewinde versehenen unteren Abschnitt an einem Schaft des Schraubbolzens ausgelegt ist, wobei das Bauteil einen Körper mit einer Durchgangsöffnung hindurch zum Aufnehmen des Schafts des Schraubbolzens umfasst, wobei der Körper umfasst:
einen mittleren Abschnitt (351') mit einer zylindrischen Außenfläche,
einen oberen Endabschnitt (352A') zur Anordnung benachbart zu dem Kopf des Schraubbolzens und einen unteren Endabschnitt (352B') zur Anordnung benachbart zu dem mit Gewinde versehenen unteren Abschnitt des Schraubbolzens, wobei der obere und der untere Endabschnitt jeweils eine zylindrische Außenfläche aufweisen,
einen oberen Zwischenabschnitt (353A'), der den oberen Endabschnitt und den mittleren Abschnitt verbindet, und einen unteren Zwischenabschnitt (353B'), der den unteren Endabschnitt und den mittleren Abschnitt verbindet, wobei zumindest der untere Zwischenabschnitt eine Außenfläche aufweist, die so geneigt ist, dass sie die Außenfläche des mittleren Abschnitts unter einem schrägen Winkel trifft,
wobei der obere und der untere Zwischenabschnitt zusammen mit dem mittleren Abschnitt eine Aussparung zum Aufnehmen eines Abschnitts einer Eisenbahnschienenbefestigungsklemme definieren.

12. System nach Anspruch 10 oder 11, wobei der obere Zwischenabschnitt (353A') ebenfalls eine Außenfläche aufweist, die so geneigt ist, dass sie die Außenfläche des mittleren Abschnitts unter einem schrägen Winkel trifft.

## Revendications

1. Système de fixation de rail par vissage (500A ; 500B ; 500C) pour fixer un rail ferroviaire (4) à une fondation sous-jacente, le système comprenant :
un dispositif de guidage d'attache (100 ; 100A ; 1000 ; 1000') ;
un ensemble boulon à vis (30 ; 30') comprenant un boulon à vis (3 ; 3A', 305 ; 305A ; 3000) ayant une tige allongée avec une partie inférieure et une tête (32A) ; et
une attache de fixation de rail ferroviaire à entraînement latéral (2, 2B ; 2C, 20, 200, 2000), configurée pour être utilisée avec le dispositif (100 ; 100A ; 1000 ; 1000') et le boulon à vis (3 ; 3A', 305 ; 305A ; 3000) pour fixer l'attache de fixation de rail ferroviaire à un emplacement souhaité adjacent au rail ferroviaire (4), l'attache de fixation de rail ferroviaire (2, 2B ; 2C, 20, 200, 2000) étant fixée par le boulon à vis (3 ; 30' ; 305 ; 305A ; 3000), l'attache de fixation de rail ferroviaire ayant une partie d'appui de rail destinée à prendre appui sur un patin du rail ferroviaire,
le dispositif (100 ; 100A ; 1000 ; 1000') ayant :
une base (110 ; 1010) ;
des surfaces de contact d'attache (114 ; 1014) prévues sur les faces latérales s'étendant vers le haut des parois de guidage espacées (111A, 111B ; 1011A, 1011B) faisant saillie à partir de la base, les surfaces de contact d'attache définissant entre elles une région de réception d'attache (115 ; 1015) destinée à recevoir l'attache de fixation de rail ferroviaire, la région de réception d'attache présentant une ligne centrale (CL1 ; CL21) qui s'étend dans une première direction, et les surfaces de contact d'attache étant configurées pour entrer en contact avec l'attache de fixation de rail ferroviaire de sorte à guider l'attache de fixation de rail ferroviaire pendant que l'attache de fixation de rail ferroviaire est entraînée dans la première direction ; et
un trou (116 ; 1016) qui s'étend à travers la base du dispositif entre les parois de guidage pour recevoir la partie inférieure du boulon à vis ;
dans lequel le trou présente une ligne centrale (CL2 ; CL22) qui est décalée par rapport à la ligne centrale de la région de réception d'attache dans une seconde direction qui est perpendiculaire à la première direction, de sorte que les surfaces de contact d'attache sont disposées de manière asymétrique par rapport au trou et que la rotation du boulon à vis dans un premier sens de rotation conduit à un mouvement de translation de la partie d'appui de rail de l'attache de fixation de rail ferroviaire, à l'opposé du boulon à vis, et que la rotation du boulon à vis dans un second sens de rotation opposé au premier sens de rotation conduit à un mouvement de translation de la partie d'appui de rail de l'attache de fixation de rail ferroviaire, vers le boulon à vis, et
dans lequel l'attache de fixation de rail ferroviaire et l'ensemble boulon à vis comportent des parties d'entraînement respectives venant en prise les unes avec les autres au niveau desquelles l'ensemble boulon à vis vient en prise avec l'attache, les parties venant en prise les unes avec les autres (220A, 330A ; 2201, 3305) étant configurées et agencées de telle sorte que la rotation du boulon à vis autour de l'axe longitudinal du boulon à vis dans un premier sens de rotation conduit à un mouvement de translation de la partie d'appui de rail de l'attache à l'opposé de l'axe longitudinal du boulon à vis, et que la rotation du boulon à vis autour de l'axe longitudinal du boulon à vis dans un second sens de rotation opposé au premier sens de rotation conduit à un mouvement de translation de la partie d'appui de rail de l'attache vers l'axe longitudinal du boulon à vis.

2. Système selon la revendication 1, dans lequel le dispositif comprend en outre une rampe inclinée vers le haut (1017) configurée pour supporter une partie arrière de l'attache de fixation de rail ferroviaire, la rampe étant prévue au niveau d'une extrémité de la région de réception d'attache (1015) et ayant une surface de rampe faisant face à l'extrémité opposée de la région de réception d'attache.

3. Système selon la revendication 1 ou 2, dans lequel les parties d'entraînement venant en prise les unes avec les autres (220A, 330A ; 2201, 3305) sont configurées de telle sorte que :
(i) une phase initiale de rotation du boulon à vis (305 ; 3050) dans le premier sens de rotation permet de déplacer la partie d'appui de rail (230 ; 2300) de l'attache (200 ; 2000) en translation d'une première position, dans laquelle la partie d'appui de rail de l'attache ne repose pas sur le patin de rail, vers une seconde position, dans laquelle l'attache repose sur le patin de rail, et une phase de rotation ultérieure du boulon à vis dans le premier sens de rotation ne déplace pas la partie d'appui de rail de l'attache en translation, mais augmente la charge sur la partie d'appui de rail de l'attache ; alors que
(ii) une phase initiale de rotation du boulon à vis (305 ; 3050) dans le second sens de rotation, tandis que la partie d'appui de rail (230 ; 2300) de l'attache (200 ; 2000) se trouve dans la seconde position, permet de diminuer la charge sur la partie d'appui de rail de l'attache sans déplacer la partie d'appui de rail de l'attache en translation, et une phase de rotation ultérieure du boulon à vis dans le second sens de rotation sert à déplacer la partie d'appui de rail de l'attache en translation de la seconde position à la première position.

4. Système selon l'une quelconque des revendications précédentes, dans lequel les parties venant en prise les unes avec les autres (220A, 330A) de l'attache de fixation de rail ferroviaire (200) et de l'ensemble boulon à vis (300) comprennent des régions de l'attache et de l'ensemble boulon à vis dans lesquelles la friction est suffisamment élevée pour que la rotation du boulon à vis, tandis que les parties venant en prise les unes avec les autres de l'attache et de l'ensemble boulon à vis sont en contact, soit suffisante pour conduire au déplacement en translation de l'attache.

5. Système selon l'une quelconque des revendications 1 à 3, dans lequel les parties venant en prise les unes avec les autres (2201, 3305) de l'attache de fixation de rail ferroviaire (2000) et de l'ensemble boulon à vis (3000) comprennent un mécanisme d'engrenage.

6. Système selon l'une quelconque des revendications précédentes, dans lequel l'attache de fixation de rail ferroviaire est asymétrique par rapport à une ligne parallèle à une direction d'entraînement de l'attache de sorte à compenser la charge sur le boulon à vis lorsque l'attache de fixation de rail ferroviaire se trouve en position sur le rail ferroviaire.

7. Système selon la revendication 6, dans lequel deux parties (221B, 222B) de l'attache (2B) qui sont adaptées pour prendre appui sur le rail ferroviaire et qui se trouvent respectivement de part et d'autre de la ligne, sont de longueur inégale.

8. Système selon la revendication 6 ou 7, dans lequel deux parties (221C ; 222C) de l'attache (2C) qui sont adaptées pour prendre appui sur un rail ferroviaire et qui se trouvent respectivement de part et d'autre de la ligne, s'étendent selon des angles respectifs qui ont des valeurs différentes l'une de l'autre.

9. Système selon l'une quelconque des revendications précédentes, dans lequel l'attache de fixation de rail ferroviaire (2, 2B ; 2C, 20, 200, 2000) est constituée d'une tige en matériau élastique recourbée de manière à présenter : une partie de fixation (21B ; 21C), comprenant deux branches droites (211B, 212B ; 211C, 212C) reliées à une extrémité par une partie incurvée (213B ; 213C) de sorte que la partie de fixation ait la forme de la lettre U ; la partie d'appui de rail (22B ; 22C) comprenant deux pattes droites (221B, 222B ; 221C, 222C) ; et deux parties recourbées s'étendant vers le bas (223B ; 223C) reliées respectivement entre les extrémités libres du U et les pattes droites.

10. Système selon l'une quelconque des revendications précédentes, dans lequel le boulon à vis comprend une tige comportant une partie inférieure filetée (31') et la tête (32') sur le dessus de la tige, dans lequel une partie de bride profilée formée d'un seul tenant (35') est située sur la tige entre la tête et la partie inférieure filetée, la partie de bride comprenant :
une section centrale (351') ayant une surface extérieure cylindrique,
une section d'extrémité supérieure (352A') adjacente à la tête du boulon à vis et une section d'extrémité inférieure (352B') adjacente à la partie inférieure filetée du boulon à vis, chacune des sections d'extrémité supérieure et inférieure ayant une surface extérieure cylindrique, dont le diamètre est supérieur à celui de la section centrale mais inférieur au diamètre du diamètre extérieur de la tête,
une section intermédiaire supérieure (353A') reliant la section d'extrémité supérieure et la section centrale, et une section intermédiaire inférieure (353B') reliant la section d'extrémité inférieure et la section centrale, au moins la section intermédiaire inférieure ayant une surface extérieure qui est inclinée de sorte à rencontrer la surface extérieure de la section centrale selon un angle oblique,
dans lequel les sections intermédiaires supérieure et inférieure, conjointement avec la section centrale, définissent un évidement destiné à recevoir une partie d'une attache de fixation de rail ferroviaire.

11. Système selon l'une quelconque des revendications 1 à 9, dans lequel le système comprend en outre un composant (35") configuré pour être positionné sur le boulon à vis entre la tête du boulon à vis et une partie inférieure filetée sur une tige du boulon à vis, le composant comprenant un corps comportant un passage à travers celui-ci destiné à recevoir la tige du boulon à vis, dans lequel le corps comprend :
une section centrale (351') ayant une surface extérieure cylindrique,
une section d'extrémité supérieure (352A') destinée à être positionnée de manière adjacente à la tête du boulon à vis et une section d'extrémité inférieure (352B') destinée à être positionnée de manière adjacente à la partie inférieure filetée du boulon à vis, chacune des sections d'extrémité supérieure et inférieure ayant une surface extérieure cylindrique,
une section intermédiaire supérieure (353A') reliant la section d'extrémité supérieure et la section centrale, et une section intermédiaire inférieure (353B') reliant la section d'extrémité inférieure et la section centrale, au moins la section intermédiaire inférieure ayant une surface extérieure qui est inclinée de sorte à rencontrer la surface extérieure de la section centrale selon un angle oblique,
dans lequel les sections intermédiaires supérieure et inférieure, conjointement avec la section centrale, définissent un évidement destiné à recevoir une partie d'une attache de fixation de rail ferroviaire.

12. Système selon la revendication 10 ou 11, dans lequel la section intermédiaire supérieure (353A') a également une surface extérieure qui est inclinée de sorte à rencontrer la surface extérieure de la section centrale selon un angle oblique.
